# EUROPEAN PATENT APPLICATION

(11) **EP 4 299 845 A1**
(43) Date of publication of application: **03.01.2024**
(21) Application number: 23179871.1
(22) Date of filing: 16.06.2023
(51) Int. Cl.: E02F 9/26, E02F 9/20

(54) **DISPLAY CONTROL DEVICE FOR CONSTRUCTION MACHINERY**

(30) Priority: 30.06.2022 JP 2022105238
(71) Applicant: Yanmar Holdings Co., Ltd., Osaka-shi, Osaka (JP)
(72) Inventor: TORADA, Masaaki, Fukuoka (JP)
(74) Representative: Novagraaf International SA

(57) **Abstract**

[Problem] To provide a display control device for construction machinery that allows an operator to intuitively recognize changes in an operation pattern at appropriate timing.

[Solution] A display control device for construction machinery causes a first display portion (DpA) to display a meter (Ic1, Ic2, Ic3) indicating a state quantity of the construction machinery and causes a second display portion located below the first display portion to display a rotation speed (Ic4) of the motor of the construction machinery, an operating time (Ic5) of the construction machinery, and current operation pattern information (Ic6 ) of the construction machinery.

## Description

### TECHNICAL FIELD

The present invention relates to a display control device for construction machinery.

### BACKGROUND ART

There is a known operation pattern switching device for construction machinery in which an indicator light located on an indicator (display device) and corresponding to an operation pattern selected from operation pattern switches is turned on so that an operator recognizes the operation pattern currently set for the construction machinery (See Patent Document 1).

The display device of the construction machinery needs to display and notify that various functions are enabled, such as the current gear of the traveling motor and auto idle, in addition to the state quantities related to operations such as radiator water temperature, fuel quantity, and operating time, and also failure warnings for the battery, radiator water temperature, failure to fasten the seat belt, and the like.

### PRIOR ART DOCUMENT

### PATENT DOCUMENT

Patent Document 1: Japanese Unexamined Patent Application Publication No. 2004-270363

### SUMMARY OF INVENTION

### TECHNICAL PROBLEM

The display on the display device of the construction machinery has different priorities for the operator's recognition of the display at the start of driving, during driving, and before the end of driving.

For example, with regard to the operation pattern, after the engine is started, the engine rotation speed is increased to the target engine rotation speed, and the operating lever is moved, the operator is supposed to recognize the display of the state quantities, warnings, and the like, with a priority over the operation pattern, but the conventional technology does not provide a display that allows the operator to recognize the operation pattern in consideration of the display that is supposed to be recognized with priority in the sequence of driving.

The present invention has been made in view of the issue of the conventional technology above and has an object to provide a display control device for construction machinery that allows the operator to intuitively recognize changes in the operation pattern at the appropriate timing while it is easy to recognize the display that is supposed to be recognized with priority in the sequence of driving.

### SOLUTION TO PROBLEM

A display control device for construction machinery according to an embodiment of the present invention is a display control device for construction machinery that causes a display unit of a display device to display information for switching an operation pattern of an operating device of the construction machinery in accordance with a switching operation, the display unit includes a first display portion and a second display portion located below the first display portion, and the display control device causes the first display portion to display a meter indicating a state quantity of the construction machinery and causes the second display portion to display a rotation speed of a motor of the construction machinery, an operating time of the construction machinery, and current operation pattern information on the construction machinery.

### ADVANTAGEOUS EFFECTS OF INVENTION

According to the present invention, the operator may intuitively recognize changes in the operation pattern at the appropriate timing while it is easy to recognize the display that is supposed to be recognized with priority in the sequence of driving.

### BRIEF DESCRIPTION OF DRAWINGS

FIG. 1 is a perspective view of a hydraulic excavator according to an embodiment of the present invention.
FIG. 2 is a schematic view of a control system of the hydraulic excavator according to an embodiment of the present invention.
FIG. 3 is a diagram illustrating an example of a home screen of a display device of the hydraulic excavator according to an embodiment of the present invention.
FIG. 4 is a diagram illustrating an example of the home screen of the display device of the hydraulic excavator according to an embodiment of the present invention.
FIG. 5 is a diagram illustrating an example of an operating unit of the display device of the hydraulic excavator according to an embodiment of the present invention.
FIG. 6 is a diagram illustrating an example of a setting menu screen of the display device of the hydraulic excavator according to an embodiment of the present invention.
FIG. 7 is a diagram illustrating an example of an operation pattern setting screen of the display device of the hydraulic excavator according to an embodiment of the present invention.
FIG. 8 is a diagram illustrating an example of the operation pattern setting screen of the display device of the hydraulic excavator according to an embodiment of the present invention.
FIG. 9 is a diagram illustrating an example of the home screen of the display device of the hydraulic excavator according to an embodiment of the present invention after an operation pattern setting is changed.
FIG. 10 is a flowchart of a control flow of a display control device of the hydraulic excavator according to an embodiment of the present invention.
FIG. 11 is a diagram illustrating an example of the home screen of the display device of the hydraulic excavator according to a modification of the embodiment of the present invention.
FIG. 12 is a diagram illustrating an example of the home screen of the display device of the hydraulic excavator according to the modification of the embodiment of the present invention.

### DESCRIPTION OF EMBODIMENTS

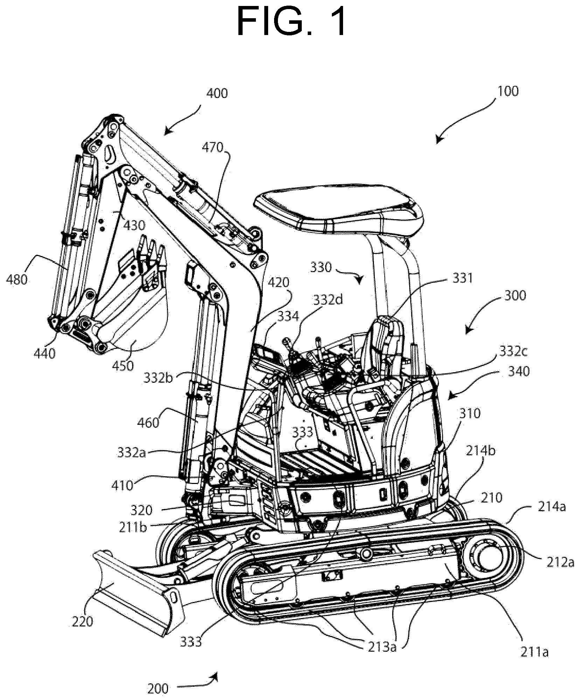

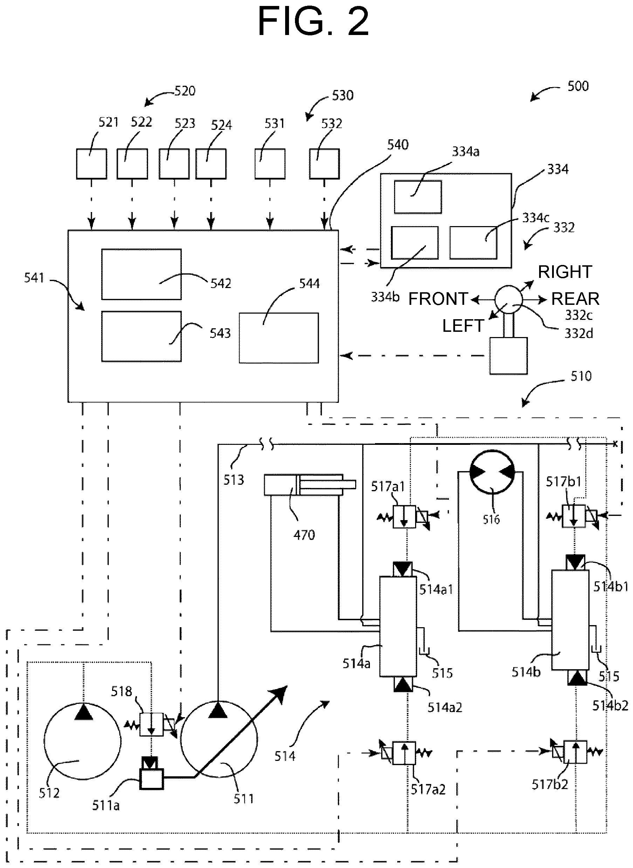

With reference to FIGS. 1 and 2, a hydraulic excavator 100 will be described below in detail as a representative example of construction machinery that includes a display control device for construction machinery according to the present invention. The direction in which a work device 400 is located on an upper turning body 300 is defined as a forward direction, and the opposite direction thereof as a backward direction.

The hydraulic excavator 100 includes a self-propelled lower traveling body 200, the upper turning body 300 supported on the lower traveling body 200 so as to turn, the work device 400 supported in front of the upper turning body 300 so as to vertically rotate, and a control system 500.

The work device 400 includes a swing post 410 supported at an end portion of the upper turning body 300 so as to rotate in a horizontal direction, a boom 420 supported on the swing post 410 so as to vertically rotate, an arm 430 mounted on an end of the boom 420 so as to vertically rotate, a bucket 450 rotatably mounted on an end of the arm 430, a swing cylinder (not illustrated) installed below the upper turning body 300 to rotate the swing post 410 in a horizontal direction, a boom cylinder 460 installed in front of and below the boom 420 to move the boom 420, an arm cylinder 470 installed above the boom 420 to move the arm 430, and a bucket cylinder 480 installed in front of the arm 430 to move the bucket 450 via a bucket link 440.

The lower traveling body 200 includes a center frame 210 and a pair of side frames 211a and 211b that is symmetrically arranged with respect to the center frame 210 and extends in a front-back direction, a drive wheel 212a is installed at a rear end of the side frame 211a on the left side to be driven by a left traveling motor (not illustrated), a plurality of idler wheels 213a is installed toward the front, a track belt 214a is wound around the drive wheel 212a and the idler wheels 213a, a drive wheel 212b (not illustrated) is installed at a rear end of the side frame 211b on the right side to be driven by a right traveling motor (not illustrated), a plurality of idler wheels 213b (not illustrated) is installed toward the front, a track belt 214b is wound around the drive wheel 212b and the idler wheels 213b, and an earth removal device 220 is mounted in front of the center frame 210.

The upper turning body 300 includes a counterweight 310 installed at the rear end, a fuselage frame 320 extending forward from the counterweight 310, a driver's seat 330 located between the counterweight 310 and the swing post 410 installed at the end of the fuselage frame 320, and an engine room 340 installed below a seat 331 located in the rear portion of the driver's seat 330.

The driver's seat 330 includes an operating device 332, the seat 331, and a floor material 333 formed above the fuselage frame 320 and extending forward from a front wall of the engine room 340 below the seat 331.

The engine room 340 includes a plurality of devices, such as an engine (not illustrated), a variable capacity pump 511 that is driven by the engine and pumps hydraulic oil to a plurality of actuators that move the hydraulic excavator 100, such as the boom cylinder 460 and the arm cylinder 470, and a control valve 514 that is located below the floor material 333 and controls the plurality of actuators, and a pilot pump 512 that generates a control signal pressure (pilot pressure) input to the control valve 514 and a primary pressure of the pilot pressure input to a regulator 511a that controls the flow rate of the variable capacity pump 511.

The operating device 332 may output an operating direction and an operating quantity as electrical signals to operate each actuator via the control device 540.

The operating device 332 includes a left traveling lever 332a and a right traveling lever 332b located in rows on right and left in front of the driver's seat 330 and protruding from the floor material 333, a left operating lever 332c and a right operating lever 332d erected in console boxes located on right and left of the seat 331, etc.

A boom operation, an arm operation, a bucket operation, and a turning operation are assigned to the left operating lever 332c and the right operating lever 332d, there are four types of combinations (operation patterns) of these operations assigned, and the operator may operate a display device 334 located in front of the right operating lever 332d to select any operation pattern.

Next, the control system 500 of the hydraulic excavator 100 will be described with reference to FIG. 2.

The control system 500 includes hydraulic circuitry 510, a detection device 520, a setting switch 530, the control device 540, the operating device 332, and the display device 334.

In the hydraulic circuitry 510, a high-pressure hydraulic oil pipe extending from the variable capacity pump 511 is indicated in a solid line, and a low-pressure hydraulic oil (pilot pressure) pipe extending from the pilot pump 512 is indicated in a dotted line.

The hydraulic circuitry 510 includes a center bypass channel 513 extending from the variable capacity pump 511 and the control valve 514 including a direction switching valve that controls each actuator coupled to each of oil passages extending from the center bypass channel 513, and the hydraulic circuitry 510 is, but not limited thereto, what is called closed center circuitry in which no channel is formed from the center bypass channel 513 to a tank 515 regardless of the swing position of a spool of the direction switching valve.

The control valve 514 includes a direction switching valve 514a that controls the arm cylinder 470, a direction switching valve 514b that controls a turning motor 516, the right and left traveling motors, the boom cylinder 460, and a plurality of other direction switching valves that control the plurality of other actuators such as the bucket cylinder 480, and the plurality of other actuators and the plurality of other direction switching valves are omitted from the hydraulic circuitry 510 in the description. The pilot-pressure input port of the direction switching valve including the control valve 514 is coupled to the pilot pump 512 via an electromagnetic proportional valve 517.

The reduced pilot pressure is input from an electromagnetic proportional valve 517a1 and an electromagnetic proportional valve 517a2 to pilot-pressure input ports 514a1 and 514a2 of the direction switching valve 514a in accordance with the operating direction and the operating quantity (tilt quantity) of the left operating lever 332c or the right operating lever 332d, which causes the spool of the direction switching valve 514a to slide, and the oil corresponding to the opening volume of the corresponding spool flows to the rod side or bottom side of the arm cylinder, which causes the arm to perform a dumping or crowding action.

The reduced pilot pressure is input to the pilot-pressure input ports 514b 1 and 514b2 of the direction switching valve 514b from the electromagnetic proportional valve 517b1 and the electromagnetic proportional valve 517b2 in accordance with the direction and operating quantity of the left operating lever 332c or the right operating lever, which causes the spool of the direction switching valve 514b to slide, and the oil corresponding to the opening volume of the corresponding spool flows to the turning motor 516, which causes the upper turning body 300 to turn to right or left.

For the boom cylinder 460 and the bucket cylinder 480, a lifting action, a lowering action, a dumping action, or a crowding action are performed in accordance with the operating direction and the operating quantity (tilt quantity) of the left operating lever 332c or the right operating lever.

The detection device 520 includes a water temperature sensor 521 that detects the temperature of engine cooling water, a hydraulic oil sensor 522 that detects the temperature of the hydraulic oil, a battery sensor 523 that detects the current, voltage, and temperature of the battery, and a seat belt sensor 524 that detects whether the seat belt is fastened, to detect the states of devices of the hydraulic excavator, and the output signals of the detection devices are input to the control device 540.

The setting switch 530 includes a traveling switch 531 to select first or second gear of the traveling motor and an eco-mode switch 532 to lower the engine rotation speed and set a low fuel consumption mode so as to easily switch the settings of the hydraulic excavator. Signals from the setting switch 530 are input to the control device 540.

The operating device 332 includes the left traveling lever 332a, the right traveling lever 332b, the left operating lever 332c, the right operating lever 332d, and the like, and signals output from the operating device 332 are input to the control device 540.

The control device 540 is an ECU (electronic control unit) and includes an input buffer that performs conversion on the signal level of digital input signals, an AD converter that performs digital conversion on analog input signals, an arithmetic unit 541 including a microcomputer that calculates a control quantity from various input signals, an output driver that converts the signals into the form of drive signals for driving actuators in accordance with the output signals of the microcomputer, a communication driver, a communication receiver, etc.

Signals input to the control device 540 are indicated in a dashed-dotted line having an arrow at the end toward the control device 540, and signals output from the control device 540 are indicated in a dashed-dotted line having an arrow at the end toward the device to which the signal is input.

The arithmetic unit 541 includes a storage unit 542, an execution processing unit 543, and a setting change processing unit 544.

In addition to the threshold information for determining failure detection of the detection device 520, the storage unit 542 stores a plurality of control modes (functions) for the engine rotation speed, the information on the combination of the arm, bucket, and boom, to which operating signals are input for operations of the left operating lever 332c and the right operating lever 332d, and the electromagnetic proportional valve 517 of the control valve 514 that controls the turning action, i.e., the combination (operation pattern) of the arm, bucket, and boom by the operations of the left operating lever 332c and the right operating lever 332d and the turning operations, the currently set operation patterns, and the like.

The plurality of control modes (functions) for the engine rotation speed stored in the storage unit 542 includes an eco mode that lowers the engine rotation speed and gives priority to fuel efficiency, an auto idle function that puts the engine rotation speed in a low idle state on condition that the operating device 332 has not been operated for a certain period of time, and an auto stop function that automatically stops the engine when a certain period of time has elapsed with a boarding/exiting block lever lifted.

The operation patterns stored in the storage unit 542 are four combinations of Pattern A, Pattern B, Pattern C, and Pattern D.

In Pattern A, arm dump is assigned to the forward tilt operation of the left operating lever 332c, arm crowd to the backward tilt operation, left turn to the leftward tilt operation, and right turn to the rightward tilt operation. Furthermore, boom lowering is assigned to the forward tilt operation of the right operating lever 332d, boom lifting to the backward tilt operation, bucket crowd to the leftward tilt operation, and bucket dump to the rightward tilt operation.

In Pattern B, right turn is assigned to the forward tilt operation of the left operating lever 332c, right turn to the backward tilt operation, arm dump to the leftward tilt operation, and arm crowd to the rightward tilt operation. Furthermore, boom lowering is assigned to the forward tilt operation of the right operating lever 332d, boom lifting to the backward tilt operation, arm crowd to the leftward tilt operation, and arm dump to the rightward tilt operation.

In Pattern C, boom lowering is assigned to the forward tilt operation of the left operating lever 332c, boom lifting to the backward tilt operation, bucket dump to the leftward tilt operation, and bucket arm to the rightward tilt operation. Furthermore, arm dump is assigned to the forward tilt operation of the right operating lever 332d, arm crowd to the backward tilt operation, left turn to the leftward tilt operation, and right turn to the rightward tilt operation.

In Pattern D, boom lowering is assigned to the forward tilt operation of the left operating lever 332c, boom lifting to the backward tilt operation, bucket dump to the leftward tilt operation, and bucket arm to the rightward tilt operation. Furthermore, arm crowd is assigned to the forward tilt operation of the right operating lever 332d, arm dump to the backward tilt operation, left turn to the leftward tilt operation, and right turn to the rightward tilt operation.

The execution processing unit 543 determines a failure of the device based on the threshold information in the storage unit 542 and the input signal of the detection device 520 and causes the display device 334 to output a failure signal of the device.

The execution processing unit 543 causes the electromagnetic proportional valve 517 of the control valve 514 to output the signal based on the output signal of the operating device 332. In particular, for the output signals of the left operating lever 332c and the right operating lever 332d, the electromagnetic proportional valve 517 is caused to output signals based on the currently set operation pattern.

When the traveling second gear is selected with the traveling switch 531, the execution processing unit 543 causes a swash plate change unit (not illustrated) of the traveling motor to output a signal for inclining a swash plate of the traveling motor and outputs a signal, to the display device 334, that the traveling second gear has been set.

When the eco-mode switch 532 is pressed, the engine ECU (not illustrated) is caused to output an engine rotation speed setting command signal stored as the eco mode and the display device 334 is caused to output a signal that the eco mode has been set.

The execution processing unit 543 causes the electromagnetic proportional valve 518 to output the signal based on the output signal of the operating device 332. The pilot pressure reduced by the electromagnetic proportional valve 518 is input to the regulator 511a so that the flow rate of the hydraulic oil discharged by the variable capacity pump 511 is controlled. In other words, the flow rate of the variable capacity pump 511 decreases as the operating quantity of the operating device 332 decreases, and the flow rate of the variable capacity pump 511 increases as the operating quantity of the operating device 332 increases.

The setting change processing unit 544 updates the currently set operation pattern stored in the storage unit 542 to the changed operation pattern with the operation pattern change signal transmitted from the display device 334 in accordance with the operation pattern change operation of the display device 334.

The setting change processing unit 544 updates the auto idle function and the auto stop function stored in the storage unit 542 from the disabled state to the enabled state in accordance with the operation for enabling these functions on the display device 334.

After the auto idle function and the auto stop function are enabled, the execution processing unit 543 executes these functions when predetermined conditions are satisfied.

The display device 334 includes a display unit 334a, a control unit 334b, and an operating unit 334c.

The display unit 334a is, but not limited thereto, a liquid crystal display and may also be an organic EL display.

The control unit 334b is an ECU (electronic control unit) and controls the display unit 334a so as to display images and not only display images reflecting the operations of the operating unit 334c but also controls image display based on the output signal of the control device 540.

The operating unit 334c is, but not limited thereto, a jog dial and may be a touch panel operating tool or a push button operating tool.

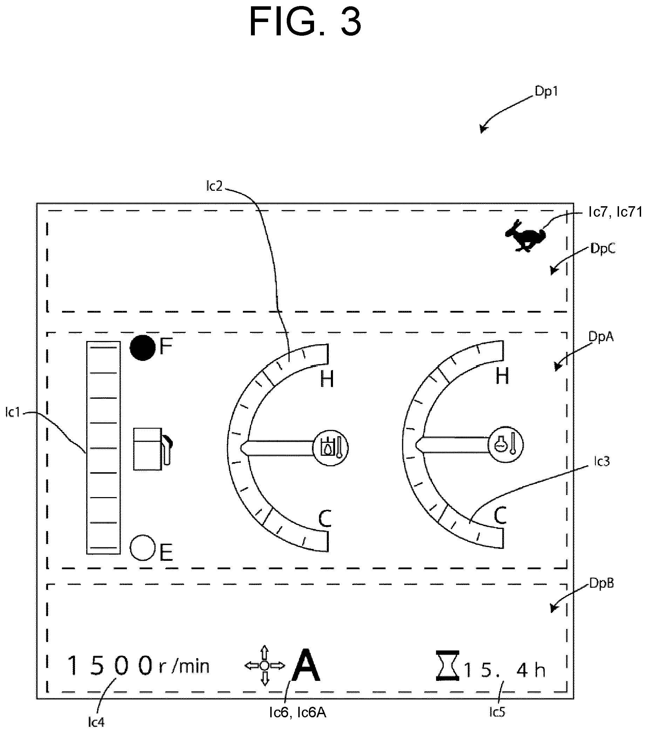

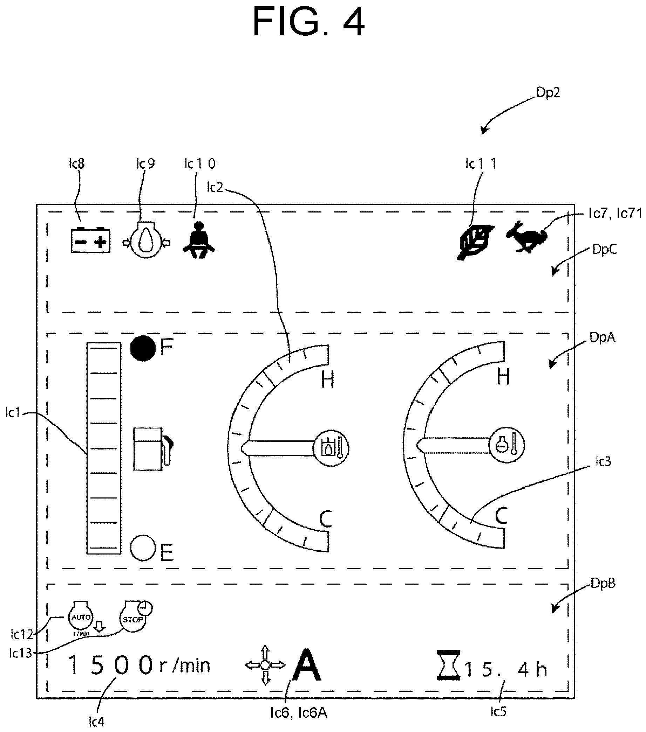

Next, the display control for the display control device for construction machinery according to the present invention will be described in detail with reference to FIGS. 3 to 4. The dotted lines in the drawing are intended to represent the area of a display screen and are not indicated on the actual display device 334.

FIG. 3 illustrates a home screen Dp1 displayed on the display unit 334a.

The home screen Dp1 includes a first display portion DpA, a second display portion DpB, and a third display portion DpC.

The first display portion DpA is located at a screen center portion to display, side by side from the left end to the right end of the screen, a fuel meter Ic1 indicating the remaining fuel quantity by using the height of a bar, a hydraulic oil temperature meter Ic2 indicating the temperature of the hydraulic oil by using the position of the rotating needle, and a cooling water temperature meter Ic3 indicating the cooling water temperature by using the position of the rotating needle. As a result, while working in the hydraulic excavator 100, the operator may easily check the state quantities, such as the remaining fuel quantity, the hydraulic oil temperature, and the cooling state of the hydraulic excavator.

The second display portion DpB is located below the first display portion DpA and in a lower portion of the screen. An engine rotation speed Ic4 is displayed on the lower left end of the second display portion DpB, and an hour meter Ic5 is displayed on the lower right end. An icon Ic6 (Ic6A) indicating the current operation pattern is displayed to the right of the engine rotation speed Ic4. Immediately after turning on a key of the hydraulic excavator 100, the operator may visually check the operation pattern while watching the engine rotation speed Ic4 and turning an accelerator volume toward a higher speed side, which may prevent improper operations. The operation pattern is a display that is recognized with low priority in particular during operation, and thus the operation pattern located in the lower portion of the screen does not interfere with the visibility of a high-priority display during work.

Above the engine rotation speed Ic4 in the second display portion DpB, there are a space for displaying an icon that appears when the auto idle function described below is enabled and a space for displaying an icon that appears when the auto stop function is enabled, and the icon Ic6 is displayed at a position shifted to the side and below from these spaces.

The icon Ic6 includes a circle serving as a symbol of the operating lever, icons of arrows located above, under, to the right and left of the circle as the center, and the icon of the alphabet located adjacent to the icons of arrows and indicating the operation pattern, but the icon Ic6 is not limited thereto, and may be only the icon of the alphabet.

The third display portion DpC is located above the first display portion DpA and is located in an upper portion of the screen. An icon Ic7 (Ic71) indicating any of the first and second gears of the traveling motor is displayed at an upper right end portion of the third display portion DpC. The icon Ic71 is an icon shaped like a rabbit, indicating that the traveling motor is currently in the second gear, but when the traveling motor is in the first gear, the icon shaped like a turtle appears. To the left of the icon Ic7, there is a space for displaying an icon that appears when the eco mode is enabled, as described below. That is, the space in the upper right end portion of the third display portion DpC is a space for displaying an icon indicating an enabled function of the hydraulic excavator 100 when the function is enabled, and as the second display portion DpC is at an easily visible position on the screen, the second display portion DpC displays the icon indicating the enabled function when the frequently used function of the hydraulic excavator 100 is enabled. In particular, according to the present embodiment, the function assigned to the setting switch 530 is displayed.

At the upper left end portion of the third display portion DpC, there is a space for displaying an icon of a faulty device of the hydraulic excavator 100.

In the third display portion DpC, the icon indicating the enabled function and the icon of the faulty device of the hydraulic excavator 100 are displayed separately on the right and left, but the displays on the right and left may be switched, or these icons may be displayed separately in the vertical direction, or the warning to be notified may be displayed in an available space with an icon or text. These configurations may make it easy for the operator to recognize the display that is supposed to be recognized with highest priority during an operation.

A home screen Dp2 is a screen that displays, in addition to the home screen Dp1, the icons indicating failures of the devices in the hydraulic excavator 100 and the icons indicating additionally enabled functions of the hydraulic excavator 100.

When the signals for the battery, the engine cooling water, and the failure to fasten the seat belt are input to the display device 334, an icon Ic8 indicating a battery failure, an icon Ic9 indicating an engine cooling water failure, and an icon Ic10 indicating the failure to fasten the seat belt are displayed, from left, in the space on the upper left end portion of the third display portion DpC on the home screen Dp2. The icons Ic8, Ic9 and Ic10 may be set to red or yellow depending on the danger level of the device failure.

When the eco-mode switch 532 is pressed, an icon Ic11 indicating that the eco mode has been set is displayed next to the icon Ic7 indicating either the first or second gear of the traveling motor. The icons Ic7 and Ic11 may be set to green so as to be distinguished from the icons Ic8, Ic9 and Ic10 indicating device failures.

When the auto decelerator function and the auto stop function are set by the display device 334, an icon Ic12 indicating that the auto decelerator function has been set and an icon Ic13 indicating that the auto stop function has been set are displayed in the space on the upper left end portion of the second display portion DpB on the home screen Dp2.

The icons Ic7 and Ic11 are not displayed in the second display portion DpB, and the icons Ic12 and Ic13 are not displayed in the third display portion DpC. The icon corresponding to the function of the hydraulic excavator 100 displayed in the third display portion DpC is not displayed in the second display portion DpA, and the icon corresponding to the function of the hydraulic excavator 100 not displayed in the third display portion DpC, i.e., an icon different from the icon displayed in the third display portion DpC is displayed. With this configuration, the icons with low priority to be recognized during driving are collected in the lower portion of the screen so that the operator may intuitively recognize changes in the operation pattern at the appropriate timing while it is easy to recognize the display that is supposed to be recognized with priority in the sequence of driving.

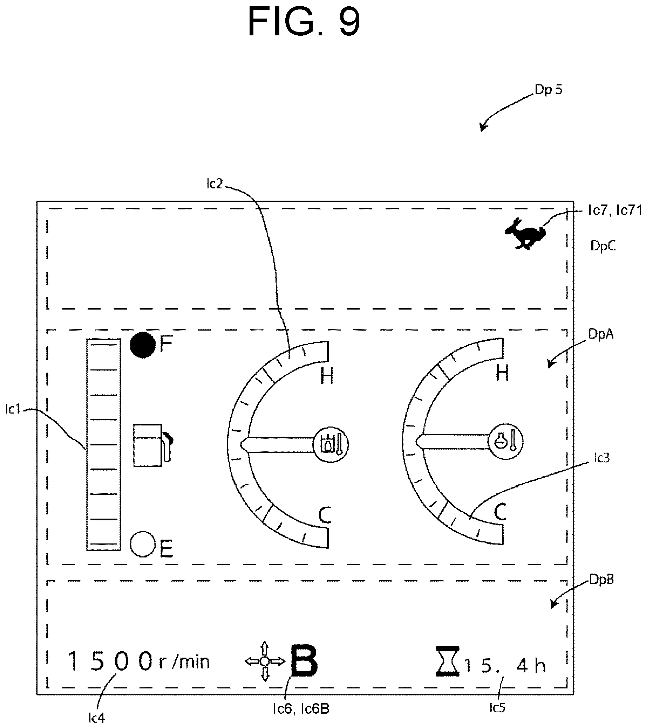

Next, the method for changing the operation pattern will be described with reference to FIG. 3 and FIGS. 5 to 9.

The operation pattern is changed by operating the screen displayed on the display unit 334a with the operating unit 334c.

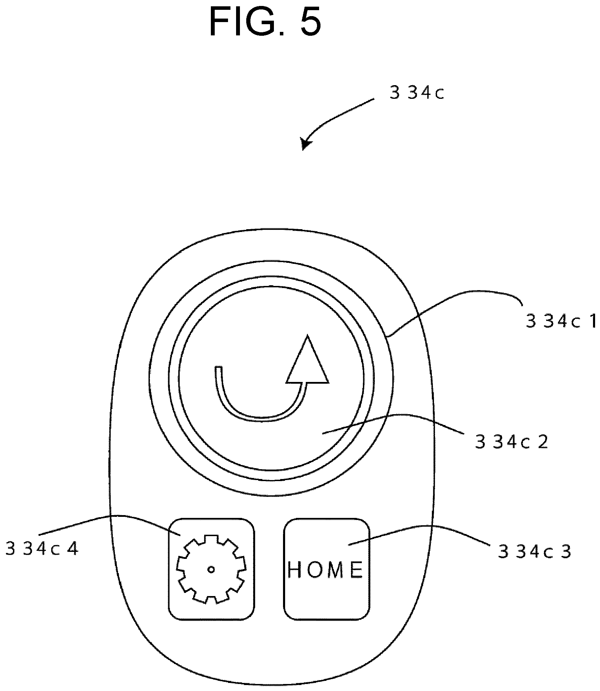

FIG. 5 is a schematic view of a jog dial that is the operating unit 334c. The operating unit 334c includes an operating dial 334c1, a determination button 334c2, a home button 334c3, and a setting menu button 334c4.

When the setting menu button 334c4 is pressed while the home screen Dp1 is displayed on the display unit 334a, the home screen Dp1 shifts to a setting menu screen Dp3.

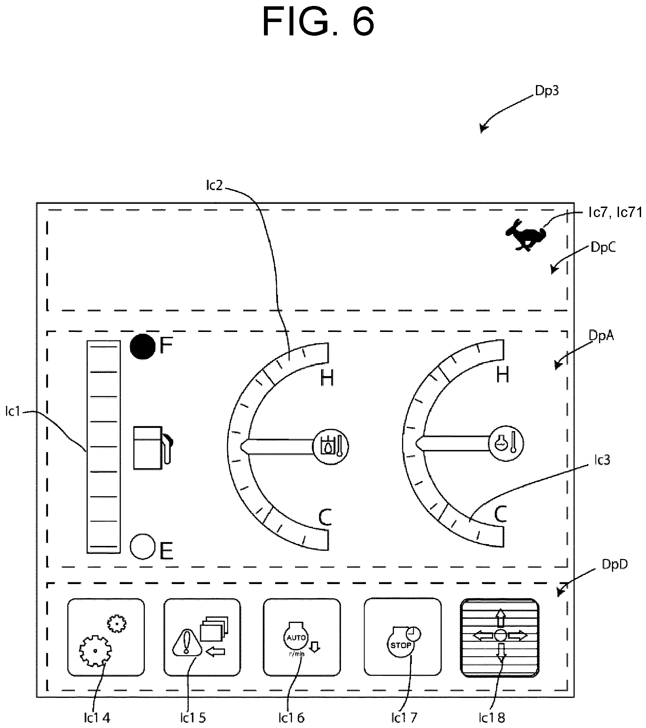

FIG. 6 illustrates the setting menu screen Dp3 displayed on the display unit 334a. On the setting menu screen Dp3, a fourth display portion DpD is located at the position where there is the second display portion DpB on the home screen Dp1 to display the setting icons for various settings or for checking the device information of the hydraulic excavator 100.

The fourth display portion DpD displays an icon Ic14 for shifting to a screen for setting more detailed functions, an icon Ic15 for shifting to a screen for checking the history of device errors, an icon Ic16 for shifting to a screen for enabling the auto idle function, an icon Ic17 for shifting to a screen for enabling the auto stop function, and an icon Ic18 for shifting to a screen for selecting an operation pattern.

Any one of the icons displayed on the fourth display portion DpD is always highlighted, the operating dial 334c1 may be rotated to select the icon to be highlighted, the determination button 334c2 may be pressed to shift from the setting menu screen Dp3 to the screen set for the icon, and in FIG. 6, the icon Ic18 is highlighted, and when the determination button 334c2 is pressed, the setting menu screen Dp3 shifts to an operation pattern setting screen Dp4.

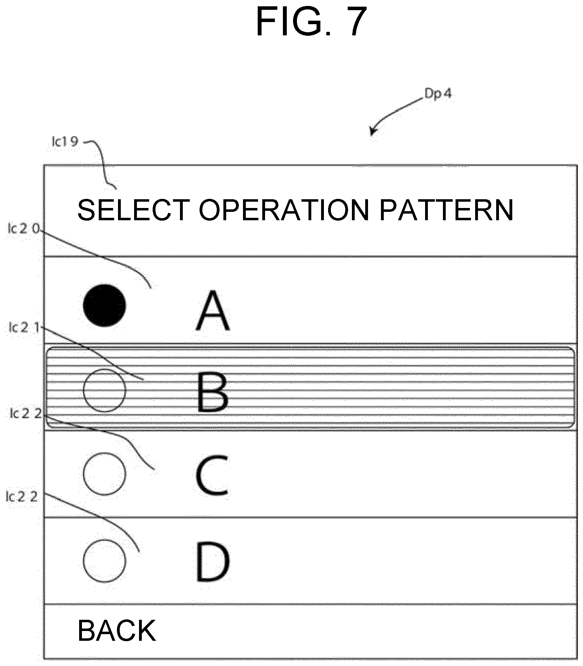

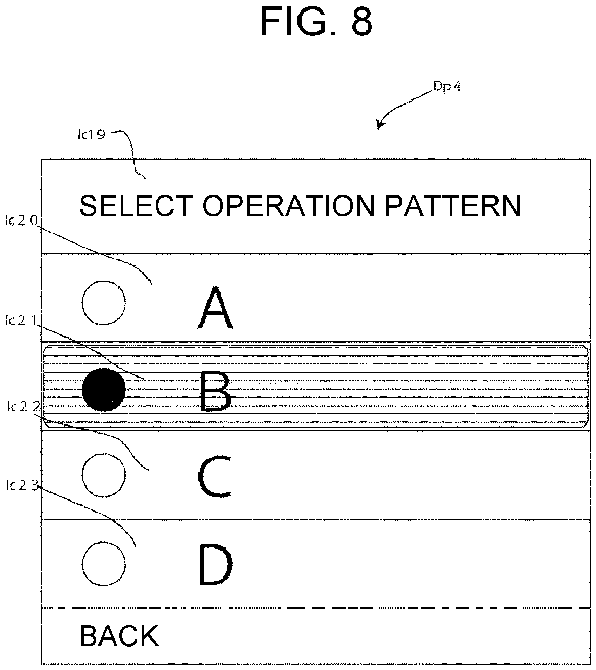

FIGS. 7 and 8 illustrate the operation pattern setting screen Dp4 displayed on the display unit 334a.

A text Id9 explaining the screen is displayed in an upper portion of the operation pattern setting screen Dp4 and, under the text Ic19, icons Ic20, Ic21, Ic22, and Ic23 indicating operation patterns are lined up from top to bottom. The icons indicating the operation patterns include circular shapes and the alphabets indicating the operation patterns, and the circular portion of the icon for the current operation pattern is black.

In FIG. 7, the current operation pattern is set to Pattern A, the operating dial 334c1 is rotated to highlight the icon of the pattern to be changed, and the determination button 334c2 is pressed to change the circular portion of the highlighted icon into black, and the circular portion of the icon before the change is changed into white. In FIG. 8, Pattern B is set.

When the home button 334c3 is pressed while the operation pattern setting screen Dp4 of FIG. 8 is displayed on the display unit 334a, the operation pattern setting screen Dp4 shifts to the home screen Dp5.

The icon Ic6 on the home screen Dp5 is changed to the icon Ic6B indicating Pattern B of the operation pattern.

When the operation pattern is changed, a change in the operation pattern may be inacceptable unless the boarding/exiting block lever is lifted (the operating device 332 is inoperable), in which case, the icon Ic18 is not selectable on the setting menu screen Dp3. This makes it possible to change the operation pattern safely and also makes it easier for the operator to recognize the currently set operation pattern, as the operation is inoperable immediately after the operation pattern is changed.

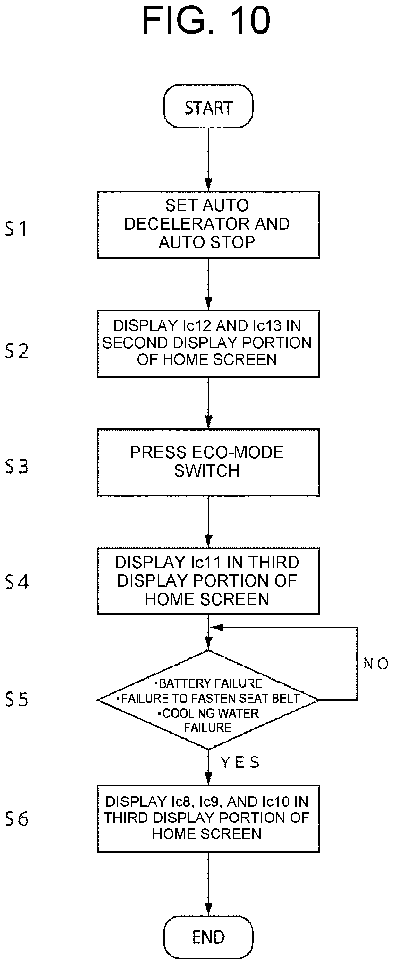

A control flow will be described with reference to FIG. 10. FIG. 10 is a flowchart for a control method.

When auto decelerator and auto stop are set (S1), the icons Ic12 and Ic13 are displayed in the second display portion DpB of the home screen Dp1 (S2).

When the eco-mode switch 532 is pressed (S3), the icon Ic11 is displayed in the third display portion DpC of the home screen Dp1 (S4).

When the control device 540 detects a battery failure, a cooling water failure, and a failure to fasten the seat belt (S5: YES), the icons Ic8, Ic9, and Ic10 are displayed in the third display portion DpC of the home screen Dp1 (S6).

When the control device 540 does not detect a battery failure, a cooling water failure, or the failure to fasten the seat belt (S5: NO), the home screen Dp1 maintains the display state of S4.

The control device 540 repeatedly performs the process from Steps S1 to S6 described above. The flowchart illustrated in FIG. 10 is merely an example, and any process may be added or omitted as appropriate, or the order of processes may be switched as appropriate.

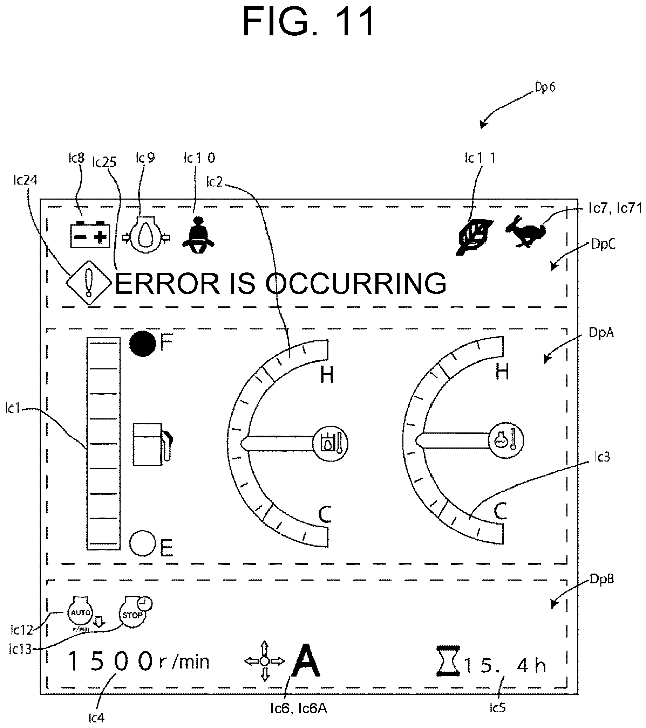

A modification of the embodiment of the present invention will be described with reference to FIG. 11.

A home screen Dp6 according to the modification in FIG. 11 displays a text "Error is occurring" Ic25 in the third display portion DpC with an icon Ic24, which indicates that some kind of failure has occurred, together with the icons Ic8, Ic9, and Ic10, which inform about the failures of the devices.

According to another modification of the embodiment of the present invention, an area may be provided between the first display portion DpA and the second display portion DpB to display a monitoring image of the surroundings of the hydraulic excavator 100. In this case, the area between the first display portion DpA and the third display portion DpC may be narrowed.

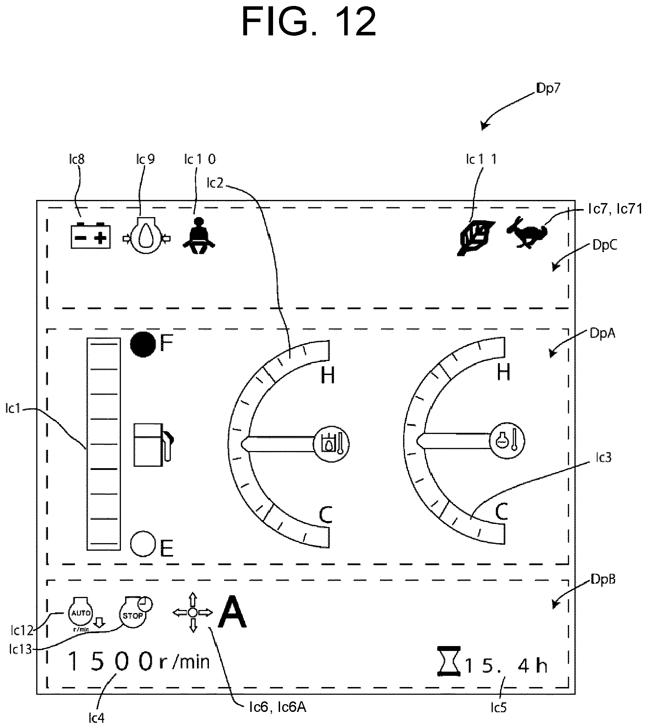

Next, another embodiment of the present invention will be described with reference to FIG. 12.

FIG. 12 illustrates a home screen Dp7 that is displayed on the display unit 334a and that is identical to the embodiment except that the icon Ic6 is displayed at a different position. The icon Ic6 is displayed at a position above the engine rotation speed Ic4 and off to the side of the icons Ic12 and Ic13. The icon Ic6 is displayed on the right side of the icon Ic13, but may also be displayed on the right side of the second display portion, and in either case, the operator may intuitively recognize changes in the operation pattern at the appropriate timing while it is easy to recognize the display that is supposed to be recognized with priority in the sequence of driving.

The display control device for construction machinery according to the present embodiment and other embodiments described above may be specified as follows.

<Note 1> A display control device for construction machinery causes a display unit of a display device to display information for switching an operation pattern of an operating device of the construction machinery in accordance with a switching operation, the display unit includes a first display portion and a second display portion located below the first display portion, and the display control device causes the first display portion to display a meter indicating a state quantity of the construction machinery and causes the second display portion to display a rotation speed of a motor of the construction machinery, an operating time of the construction machinery, and current operation pattern information on the construction machinery.

<Note 2> In the display control device for construction machinery according to Note 1, the display unit includes a third display portion located above the first display portion, the display control device causes the third display portion to display a device icon corresponding to a device of the construction machinery in which a failure has been detected and a first function icon corresponding to a function set for the construction machinery and causes the second display portion to display a second function icon corresponding to a function set for the construction machine, and the second function icon is different from the first function icon.

<Note 3> In the display control device for construction machinery according to Note 1 or 2, the display control device displays the operation pattern information at a position shifted from a position where the second function icon is displayed.

<Note 4> In the display control device for construction machinery according to any one of Notes 1 to 3, the display control device displays the operation pattern information at a position shifted to a side from the position where the second function icon is displayed.

<Note 5> In the display control device for construction machinery according to any one of Notes 1 to 4, the display control device displays the operation pattern information at a position shifted below from the position where the second function icon is displayed.

<Note 6> In the display control device for construction machinery according to any one of Notes 1 to 5, the display control device displays the operation pattern information adjacent to the rotation speed of the motor.

<Note 7> In the display control device for construction machinery according to any one of Notes 1 to 6, the display control device displays the operation pattern information between the rotation speed of the motor and the operating time of the construction machinery.

The other embodiments and the modification described above or the various configurations described in the embodiments may be employed in combination as appropriate.

In the above description, the hydraulic excavator is used as an example of the construction machinery, but the construction machinery is not limited to hydraulic excavators and may be other construction machinery such as wheel loaders and compact track loaders, and furthermore, the engine is used as an example of the motor in the description, but may be an electric motor and, in such a case, the display control device for construction machinery may cause the display unit of the display device to display the rotation speed of the electric motor instead of the engine rotation speed.

The embodiment of the present invention has been described above, but the scope of the present invention is not limited thereto, and may be implemented with extension or modification without departing from the gist of the present invention.

### INDUSTRIAL APPLICABILITY

The present invention relates to the display control device for construction machinery and has industrial applicability.

### REFERENCE SIGNS LIST

DpA First display portion
DpB Second display portion
Ic1 Fuel meter (meter)
Ic2 Hydraulic oil temperature meter (meter)
Ic3 Cooling water temperature meter (meter)
Ic4 Engine rotation speed (motor rotation speed)
Ic5 Hour meter (operating time)
Ic6 Icon indicating operation pattern (operation pattern information)

## Claims

1. A display control device for construction machinery that causes a display unit of a display device to display information for switching an operation pattern of an operating device of the construction machinery in accordance with a switching operation, wherein
the display unit includes a first display portion and a second display portion located below the first display portion, and
the display control device causes the first display portion to display a meter indicating a state quantity of the construction machinery and causes the second display portion to display a rotation speed of a motor of the construction machinery, an operating time of the construction machinery, and current operation pattern information on the construction machinery.

2. The display control device for construction machinery according to claim 1, wherein
the display unit includes a third display portion located above the first display portion, and
the display control device causes the third display portion to display a device icon corresponding to a device of the construction machinery in which a failure has been detected and a first function icon corresponding to a function set for the construction machinery and causes the second display portion to display a second function icon corresponding to a function set for the construction machine, the second function icon being different from the first function icon.

3. The display control device for construction machinery according to claim 2, wherein the display control device displays the operation pattern information at a position shifted from a position where the second function icon is displayed.

4. The display control device for construction machinery according to claim 3, wherein the display control device displays the operation pattern information at a position shifted to a side from the position where the second function icon is displayed.

5. The display control device for construction machinery according to claim 4, wherein the display control device displays the operation pattern information at a position shifted below from the position where the second function icon is displayed.

6. The display control device for construction machinery according to any one of claims 1 to 5, wherein the display control device displays the operation pattern information adjacent to the rotation speed of the motor.

7. The display control device for construction machinery according to claim 6, wherein the display control device displays the operation pattern information between the rotation speed of the motor and the operating time of the construction machinery.
